# EUROPÄISCHE PATENTSCHRIFT

(11) **EP 3 320 765 B1**
(45) Veröffentlichungstag und Bekanntmachung des Hinweises auf die Patenterteilung: **25.09.2019**
(21) Anmeldenummer: 17201021.7
(22) Anmeldetag: 10.11.2017
(51) Int. Cl.: A01C 23/02, A01C 5/06

(54) **SCHEIBENSCHLITZEINHEIT FÜR EINE GÜLLEAUSBRINGVORRICHTUNG**
DISC SLOT UNIT FOR A LIQUID MANURE DISTRIBUTOR
UNITÉ FORMANT DES FENTES AVEC DES DISQUES POUR UN DISTRIBUTEUR DE LISIER

(30) Priorität: 11.11.2016 DE 102016121655
(43) Veröffentlichungstag der Anmeldung: 16.05.2018
(73) Patentinhaber: Fliegl Agrartechnik GmbH, 84453 Mühldorf am Inn (DE)
(72) Erfinder: Fliegl sen., Josef, 84556 Kastl (DE)
(74) Vertreter: Nußbaum, Christopher

(56) Entgegenhaltungen:
- EP-A1- 1 690 441
- DE-A1- 2 011 977
- DE-A1- 19 540 648
- DE-A1-102014 011 647
- US-A- 5 862 763
- US-A1- 2014 251 192

## Beschreibung

Die Erfindung betrifft eine Scheibenschlitzeinheit für eine Gülleausbringvorrichtung, eine Gülleausbringvorrichtung mit zumindest einer derartigen Scheibenschlitzeinheit sowie einen Fasswagen mit einer derartigen Gülleausbringvorrichtung.

Gülle ist ein wertvoller Dünger. Um Gülle insbesondere auf Grünland möglichst effektiv einzusetzen, werden häufig sogenannte bodennahe Ausbringtechniken verwendet. Die bodennahen Ausbringtechniken bringen den Vorteil mit sich, dass sich auch bei ungünstiger Witterung die ausgebrachte Dünge nicht so leicht verflüchtigt. Dabei wird Gülle in schmalen Streifen direkt auf dem Boden abgelegt oder sogar in den Boden hinein injiziert. Die schmale Ablage bietet Sonne und Wind deutlich weniger Angriffsfläche. In dem Zusammenhang ist es an sich bekannt, sogenannte Schleppschuhe bzw. Gleitschuhe, Schlitzschuhe bzw. Schlitzkufen oder Scheibenschlitzgeräte für die Gülleausbringung einzusetzen.

Bei Schleppschuhen wird lediglich vorhandenes Gras zur Seite gekämmt, wobei die auszubringende Gülle auf dem Boden abgelegt wird. Bei Schlitzschuhen bzw. Schlitzkufen werden kleine Rillen in den Boden geritzt, in die die einzubringende Gülle hineinlaufen kann. Bei den sogenannten Scheibenschlitzgeräten bzw. sogenannten Scheibenschlitzverteilern werden üblicherweise leicht V-förmige Schlitze einige Zentimeter tief in den Boden geritzt, sodass die auszubringende Gülle besonders tief in den Boden eindringen kann.

Bei den Schleppschuhen bzw. Gleitschuhen können relativ große Arbeitsbreiten realisiert werden, da ein relativ geringer Zugkraftbedarf erforderlich ist. Jedoch wird die Gülle nur oberflächlich auf dem Boden abgelegt, was insbesondere die Gefahr birgt, dass die abgelegten Güllestreifen bei Trockenheit vertrocknen können. Bei den sogenannten Schlitzschuhen bzw. Schlitzkufen können ebenfalls relativ große Arbeitsbreiten realisiert werden, da auch noch ein vergleichsweise relativ geringer Zugkraftbedarf erforderlich ist. Bei trockenem Boden allerdings können mit den Schlitzschuhen bzw. Schlitzkufen üblicherweise keine Schlitze in den Boden eingeritzt werden, wobei sich insbesondere auch ein relativ hoher Verschleiß an den Schlitzschuhen bzw. Schlitzkufen ergibt. Bei den sogenannten Scheibenschlitzgeräten wird der eingebrachte Dünger am besten verwertet, da dieser besonders tief in den Boden injiziert werden kann. Allerdings weisen die üblichen Scheibenschlitzgeräte ein sehr hohes Eigengewicht auf und können aufgrund eines erhöhten Zugkraftbedarfs nur bei relativ geringen Arbeitsbreiten eingesetzt werden.

Die EP 1 690 441 A1 zeigt einen Gülleverteiler, umfassend ein Güllefass und eine Vielzahl von mit dem Güllefass verbundenen Schläuchen, die hinter jeweiligen Schlitzscheiben münden. An einem Hauptrahmen sind mehrere Träger vorgesehen, an welchen die Schlitzscheiben unter Vermittlung doppeltwirkender Hydraulikzylinder angeordnet sind. Die Hydraulikzylinder dienen dazu, die Schlitzscheiben zwischen einer angehobenen Transportstellung und einer abgesenkten Arbeitsstellung zu bewegen.

Die DE 10 2014 011 647 A1 zeigt eine Vorrichtung zum Verteilen von Gülle. Die Vorrichtung umfasst einen Federzinken, an dem ein Paar Schlitzscheiben angeordnet sind. Hinter den Schlitzscheiben ist eine Gummidüse zum Verteilen der Gülle angeordnet.

Es ist die Aufgabe der vorliegenden Erfindung, eine technische Lösung bereitzustellen, mittels welcher Dünger besonders effektiv ausgebracht werden kann.

Diese Aufgabe wird durch eine Scheibenschlitzeinheit für eine Gülleausbringvorrichtung mit den Merkmalen des Patentanspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Scheibenschlitzeinheit für eine Gülleausbringvorrichtung umfasst ein Federelement, welches mit einem ersten Längsende an der Gülleausbringvorrichtung befestigbar ist. Das Federelement ist vorzugsweise aus Federstahl hergestellt und in Form von einer Art Blattfeder ausgebildet. An dem besagten ersten Längsende des Federelements kann beispielsweise eine Adapterplatte angeschraubt oder anderweitig befestigt werden, wobei unter Vermittlung der Adapterplatte das Federelement an der besagten Gülleausbringvorrichtung befestigt werden kann. Das Federelement ist vorzugsweise aus einem gekröpften Federstahl hergestellt, wodurch sich eine sehr kurze Bauform ergibt, sodass die auszubringende Gülle einen besonders kurzen Weg bis zum Boden hat.

Des Weiteren weist die erfindungsgemäße Scheibenschlitzeinheit eine im Bereich eines zweiten Längsendes des Federelements angebrachte Halterung auf, an welcher eine Schlitzscheibe zum Schneiden einer Furche in dem Boden drehbar gelagert ist. Die Schlitzscheibe kann beispielsweise einen leicht V-förmigen Querschnitt aufweisen, sodass diese einen V-förmigen Schlitz bei ihrer Verwendung in den Boden furchen bzw. schneiden kann, der mehrere Zentimeter tief ist, sodass einzubringende Gülle besonders tief in den Boden eingebracht werden kann.

Schließlich weist die erfindungsgemäße Scheibenschlitzeinheit einen entlang der Längsrichtung des Federelements an diesem angeordneten Auslaufschlauch auf, an welchem eine Gülledüse angebracht ist, deren Austrittsöffnung auf einen Gülleeinbringpunkt gerichtet ist, welcher bezogen auf eine bestimmungsgemäße Bewegungsrichtung der Scheibenschlitzeinheit hinter einem Aufstandspunkt der Schlitzscheibe angeordnet ist. Wird die Scheibenschlitzeinheit also über den zu düngenden Boden bewegt, so furcht zunächst die Schlitzscheibe eine mehrere Zentimeter tiefe, vorzugsweise V-förmige, Furche in den Boden hinein, während die Schlitzscheibe über den Boden abrollt. Der eigentliche Schlitzvorgang im Boden erfolgt am Aufstandspunkt der Schlitzscheibe. Durch die Anordnung und Ausrichtung der Gülledüse kann anschließend Gülle in den mittels der Schlitzscheibe hergestellten Schlitz bzw. in die mittels der Schlitzscheibe hergestellte Furche im Boden besonders tief eingebracht werden.

Bei bislang bekannten Lösungen, welche Schlitzscheiben verwenden, werden üblicherweise sehr massive Rahmen vorgesehen, an denen jeweilige Schlitzscheiben zum Schneiden von Furchen angebracht sind. Derartige Konstruktionen weisen ein sehr hohes Grundgewicht auf, in Folge dessen sich das bereits eingangs erwähnte Problem ergibt, dass keine besonders großen Arbeitsbreiten möglich sind, da ein besonders hoher Zugkraftbedarf erforderlich ist, um derartige Scheibenschlitzgeräte über einen Boden ziehen zu können. Bei der erfindungsgemäßen Lösung hingegen ist die Scheibenschlitzeinheit relativ leichtgewichtig im Vergleich zu bislang bekannten Lösungen ausgebildet, da die Schlitzscheibe nicht an einem massiven Rahmen gelagert ist.

Stattdessen ist es erfindungsgemäß vorgesehen, die Schlitzscheibe unter Vermittlung der Halterung zumindest mittelbar an dem besagten Federelement, bei welchem es sich vorzugsweise um eine Blattfeder handelt, gelagert. Mittels des Federelements kann die Schlitzscheibe mit dem zur Herstellung einer Furche im Boden erforderlichen Druck auf den Boden gedrückt werden, sodass mittels der Schlitzscheibe zuverlässig eine hinreichend tiefe Furche in den Boden gefurcht bzw. geschlitzt werden kann. Die Scheibenschlitzeinheit stützt sich dabei unter Vermittlung des Federelements an der Gülleausbringvorrichtung ab.

Die Scheibenschlitzeinheit als solche kann beispielswese als Bausatz, somit auch als Nachrüstsatz, angeboten werden. Bei Bedarf können an der Gülleausbringvorrichtung also ganz einfach die erfindungsgemäßen Scheibenschlitzeinheiten angebracht und auch ausgetauscht werden. Insgesamt bietet die Scheibenschlitzeinheit eine besonders leichtgewichtige und effektive Möglichkeit, Gülle auszubringen und ohne große Verluste in den zu düngenden Boden einzubringen.

Zudem sieht die Erfindung vor, dass die Halterung um eine Längsachse und/oder um eine Hochachse der Scheibenschlitzeinheit verschwenkbar gelagert ist. Dadurch kann, sofern erforderlich, die Schlitzscheibe um die Längsachse seitlich gekippt und/oder auch durch Verschwenkung um die Hochachse bezogen auf die Fahrtrichtung seitlich angestellt werden. Dadurch ist es auf einfache Weise möglich, die Schlitzscheibe während ihrer Verwendung derart anzuordnen, dass die mittels der Schlitzscheibe herzustellende Furche im Boden unterschiedlich breit ausgestaltet werden kann.

Eine vorteilhafte Ausführungsform der Erfindung sieht vor, dass die Halterung an einer Winkelplatte befestigt ist, welche am zweiten Längsende des Federelements befestigt ist. Die Winkelplatte weist zwei Schenkel auf, welche beispielsweise in einem rechten Winkel zueinander angeordnet sind. Einer der Schenkel ist am besagten zweiten Längsende des Federelements befestigt, wobei an dem anderen Schenkel der Winkelplatte die Halterung befestigt sein kann, beispielsweise indem die Halterung an dem Schenkel angeschraubt ist. Dadurch kann die Halterung auf besonders einfache und stabile Weise unter Vermittlung der Winkelplatte an dem zweiten Längsende des Federelements befestigt sein.

Gemäß einer alternativen vorteilhaften Ausführungsform der Erfindung ist es vorgesehen, dass die Halterung an der Gülledüse befestigt ist. Die Halterung ist also unmittelbar an der Gülledüse befestigt. In dem Fall ergibt sich eine besonders kompakte Halterung, da diese beispielsweise lediglich über zwei Schenkel verfügen muss, welche zur drehbaren Aufnahme bzw. zur drehbaren Lagerung der Schlitzscheibe geeignet sein müssen.

In weiterer vorteilhafter Ausgestaltung der Erfindung ist es vorgesehen, dass die verschwenkbare Lagerung mittels wenigstens eines bogenförmigen Langlochs und/oder mehreren unterschiedlich positionierten Bohrungen realisiert ist. Ist die Halterung beispielsweise unter Vermittlung der besagten Winkelplatte an dem zweiten Längsende des Federelements befestigt, so können beispielsweise in der Winkelplatte mehrere bogenförmige Langlöcher vorgesehen sein, wobei die Halterung selbst entsprechende Bohrungen aufweist, sodass ein stiftförmiges Element durch die besagten Bohrungen innerhalb der Halterung und die bogenförmigen Langlöcher der Winkelplatte hindurchgeführt sind. Dies kann beispielsweise dazu dienen, um die Halterung um die Längsachse der Scheibenschlitzeinheit verschwenkbar zu lagern. Zudem ist es auch möglich, dass beispielsweise im Falle der besagten Winkelplatte diese selbst unter Vermittlung von bogenförmigen Langlöchern an dem zweiten Längsende des Federelements verschwenkbar gelagert ist, sodass eine Verschwenkbarkeit des Winkelelements und darüber auch eine Verschwenkbarkeit der Halterung, letztlich dann auch eine Verschwenkbarkeit der Scheibenschlitzeinheit um die besagte Hochachse der Scheibenschlitzeinheit gegeben ist. In analoger Weise können auch unterschiedlich positionierte Bohrungen vorgesehen werden, sodass beispielsweise die Halterung oder auch die besagte Winkelplatte derart verstellt werden können, dass in Folge dessen die Halterung mitsamt der Schlitzscheibe um die Längsachse und/oder um die Hochachse der Scheibenschlitzeinheit verschwenkbar gelagert ist. Die besagten Prinzipien sind ebenfalls auch auf die Ausführungsform übertragbar, bei welcher die Halterung an der Gülledüse und nicht an der Winkelplatte befestigt ist.

Gemäß einer weiteren vorteilhaften Ausführungsform der Erfindung ist es vorgesehen, dass die verschwenkbare Lagerung mittels einer Zahnscheibenpaarung realisiert ist. Besonders bevorzugt wird die besagte Zahnscheibenpaarung dafür eingesetzt, die Halterung und somit auch die Schlitzscheibe um die Längsachse der Scheibenschlitzeinheit verschwenkbar zu lagern. Genauso ist es aber ebenfalls möglich, mittels der Zahnscheibenpaarung eine Verschwenkbarkeit der Scheibenschlitzeinheit bzw. der Halterung um die Hochachse der Scheibenschlitzeinheit zu ermöglichen. Der Vorteil bei der Zahnscheibenpaarung liegt insbesondere darin, dass durch die Verzahnung der jeweiligen Zahnscheiben der Zahnscheibenpaarung eine gerastete Verstellbarkeit und somit eine gerastete Verschwenkbarkeit um die Längsachse oder um die Hochachse der Scheibenschlitzeinheit ermöglicht wird.

Eine weitere vorteilhafte Ausführungsform der Erfindung sieht vor, dass die Gülledüse in Form eines Gummischuhs oder in Form einer starren Düse ausgebildet ist. In beiden Fällen ist die Gülledüse vorzugsweise derart geformt, dass diese die mittels des Auslaufschlauchs beförderte Gülle derart umlenkt, sodass die Gülle auf den besagten Gülleeinbringpunkt am Boden gerichtet wird, wodurch diese zielgenau in eine mittels der Schlitzscheibe im Boden hergestellte Furche injiziert werden kann. Der Begriff Gülledüse ist dabei nicht zwangsläufig nur so zu verstehen, dass es sich bei der Gülledüse um ein sich verengendes Rohr handelt, das die Fließgeschwindigkeit der Gülle erhöht. Vielmehr ist die Gülledüse vor allem als eine Art Adapter zu verstehen, welcher zusätzlich auf ein Ende des Auslaufschlauchs beispielsweise aufgesteckt werden kann, sodass die durch den Auslaufschlauch beförderte Gülle in vorteilhafter Weise so umgelenkt wird, dass diese auf den besagten Gülleeinbringpunkt am Boden gerichtet wird.

Eine weitere vorteilhafte Ausführungsform der Erfindung sieht vor, dass die Schlitzscheibe in Querrichtung der Scheibenschlitzeinheit seitlich versetzt in der Gülledüse angeordnet ist. Dadurch können die Schlitzscheibe und die Gülledüse insbesondere in Hochrichtung der Scheibenschlitzeinheit relativ kompakt angeordnet werden.

Gemäß einer alternativen vorteilhaften Ausführungsform der Erfindung ist es vorgesehen, dass die Schlitzscheibe in Querrichtung der Scheibenschlitzeinheit zentriert zur Gülledüse angeordnet ist. Bei dieser vorteilhaften Ausführungsform der Erfindung können die Schlitzscheibe und die Scheibenschlitzeinheit in Querrichtung besonders kompakt angeordnet werden, sodass eine Vielzahl der Scheibenschlitzeinheiten besonders kompakt nebeneinander an der besagten Gülleausbringvorrichtung angeordnet werden können. In dem Fall, dass die Schlitzscheibe in Querrichtung der Scheibenschlitzeinheit zentriert zur Gülledüse angeordnet ist, kann es zudem vorgesehen sein, dass die Schlitzscheibe in die Gülledüse hineinragt. Dadurch kann auch bei dieser Ausführungsform eine relativ kompakte Ausgestaltung der Schlitzscheibe und der Gülledüse in Hochrichtung der Scheibenschlitzeinheit realisiert werden, wobei die Größe der Schlitzscheibe weniger stark eingeschränkt wird, da diese teilweise in die Gülledüse hineinragt.

Gemäß einer weiteren vorteilhaften Ausführungsform der Erfindung ist es vorgesehen, dass die Scheibenschlitzeinheit ein Abdeckelement umfasst, welches derart angeordnet ist, dass dieses den Boden bezogen auf die bestimmungsgemäße Bewegungsrichtung der Scheibenschlitzeinheit hinter dem Gülleeinbringpunkt berührt, sodass eine mittels der Schlitzscheibe im Boden hergestellte und mit Gülle befüllte Furche wieder mit Bodenmaterial abgedeckt wird. Dadurch kann die in den Boden initiierte Gülle noch besser eingearbeitet werden, da insbesondere keine Gefahr der Ausschwemmung besteht. Bei dieser vorteilhaften Ausführungsform kann eine noch bessere Nährstoffausbeute bei der Ausbringung von Gülle realisiert werden, da insbesondere eine Stickstoffverflüchtigung unterbunden wird. Zudem wird die Geruchsbildung bei der Ausbringung von Gülle nochmals reduziert, da mittels des Abdeckelements die eingebrachte Gülle wieder mit Bodenmaterial abgedeckt wird. Das Abdeckelement kann beispielsweise in Form einer flexiblen Matte, in Form eines bügelförmigen Federelements oder in Form eines Rads ausgebildet sein. Die flexible Matte kann beispielsweise aus Polyurethan hergestellt sein. Das bügelförmige Federelement kann beispielsweise zwei rechtwinklig zueinander angeordnete Schenkel aufweisen, wobei einer der Schenkel derart über den Boden streicht, dass eine mittels der Schlitzscheibe hergestellte Furche auf einfache Weise wieder mit Erde oder anderem Bodenmaterial bedeckt werden kann. Nach ähnlichem Prinzip funktioniert das als Abdeckelement dienende Rad, welches derart hinter der Schlitzscheibe hergeführt bzw. abgerollt wird, dass das Rad eine hergestellte Furche wiederum mit Bodenmaterial abdecken kann.

Die erfindungsgemäße Gülleausbringvorrichtung umfasst zumindest eine erfindungsgemäße Scheibenschlitzeinheit oder eine vorteilhafte Ausführungsform der erfindungsgemäßen Scheibenschlitzeinheit. Vorzugsweise ist eine Vielzahl von Scheibenschlitzeinheiten in Reihe nebeneinander an der Gülleausbringvorrichtung angeordnet, sodass eine Vielzahl von Furchen gleichzeitig mittels der Schlitzscheiben im Boden hergestellt und Gülle in diese Furchen initiiert werden kann.

Der erfindungsgemäße Fasswagen umfasst ein Güllefass und die erfindungsgemäße Gülleausbringvorrichtung oder eine vorteilhafte Ausführungsform der erfindungsgemäßen Gülleausbringvorrichtung, wobei diese an einer Austrittsöffnung des Güllefasses angeschlossen ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, der in den Ansprüchen definiert ist.

Die Zeichnung zeigt in:
- Fig. 1: eine Perspektivansicht eines Fasswagens mit einem Güllefass und einer Gülleausbringvorrichtung, an welcher eine Mehrzahl von Scheibenschlitzeinheiten angeordnet sind;
- Fig. 2: eine Perspektivansicht der Gülleausbringvorrichtung alleine, wobei diese im vollständig ausgeklappten Zustand in ihrer Gebrauchsstellung dargestellt ist;
- Fig. 3: eine Perspektivansicht einer ersten Ausführungsform der Scheibenschlitzeinheit, welche ein als eine Art Blattfeder ausgebildetes Federelement umfasst, an welchem eine Schlitzscheibe drehbar gelagert und daneben eine Gülledüse angebracht ist;
- Fig. 4: eine weitere Perspektivansicht der ersten Ausführungsform der Scheibenschlitzeinheit, wobei die Schlitzscheibe um eine Längsachse gekippt und seitlich zur Bewegungsrichtung der Scheibenschlitzeinheit angestellt angeordnet ist;
- Fig. 5: eine weitere Perspektivansicht der ersten Ausführungsform der Scheibenschlitzeinheit, wobei diese sich dadurch von der in Fig. 4 gezeigten Variante unterscheidet, dass die Verstellbarkeit der Schlitzscheibe zum Teil über mehrere Bohrungen realisiert ist;
- Fig. 6: eine Perspektivansicht einer zweiten Ausführungsform der Scheibenschlitzeinheit, wobei die Gülledüse in Form eines Gummischuhs ausgebildet ist;
- Fig. 7: eine Perspektivansicht einer dritten Ausführungsform der Scheibenschlitzeinheit, wobei diese eine Zahnscheibenverbindung aufweist, welche zwei Zahnräder umfasst, die gegeneinander verdrehbar sind, um die Schlitzscheibe um eine Längsachse der Scheibenschlitzeinheit verschwenken zu können;
- Fig. 8: eine weitere Perspektivansicht der dritten Ausführungsform der Scheibenschlitzeinheit, wobei die Schlitzscheibe um die Längsachse gekippt und seitlich zur Bewegungsrichtung der Scheibenschlitzeinheit angestellt worden ist;
- Fig. 9: eine Perspektivansicht einer vierten Ausführungsform der Scheibenschlitzeinheit, wobei die Schlitzscheibe direkt an der Gülledüse drehbar gelagert ist;
- Fig. 10: eine weitere Perspektivansicht der vierten Ausführungsform der Scheibenschlitzeinheit, wobei diese zusätzlich noch in einer Ansicht von unten dargestellt ist;
- Fig. 11: eine Perspektivansicht einer fünften Ausführungsform der Scheibenschlitzeinheit, wobei die Schlitzscheibe wiederum direkt an der Gülledüse gelagert ist, und wobei die Schlitzscheibe durch die Gülledüse hindurchragt;
- Fig. 12: eine weitere Perspektivansicht der dritten Ausführungsform der Scheibenschlitzeinheit, wobei an dieser zusätzlich noch eine als Abdeckelement dienende flexible Matte angeordnet ist, welche dazu dient, eine mittels der Schlitzscheibe im Boden hergestellte Furche wieder mit Bodenmaterial abzudecken;
- Fig. 13: eine vergrößerte Detailansicht von der Anordnung der flexiblen Matte an der Scheibenschlitzeinheit;
- Fig. 14: eine weitere Perspektivansicht der dritten Ausführungsform der Scheibenschlitzeinheit, wobei das Abdeckelement in Form eines bügelförmigen Federelements ausgebildet ist; und in
- Fig. 15: eine weitere Perspektivansicht der dritten Ausführungsform der Scheibenschlitzeinheit, wobei das Abdeckelement in Form eines Rads ausgebildet ist.

In den Figuren werden gleiche oder funktionsgleiche Elemente mit den gleichen Bezugszeichen versehen.

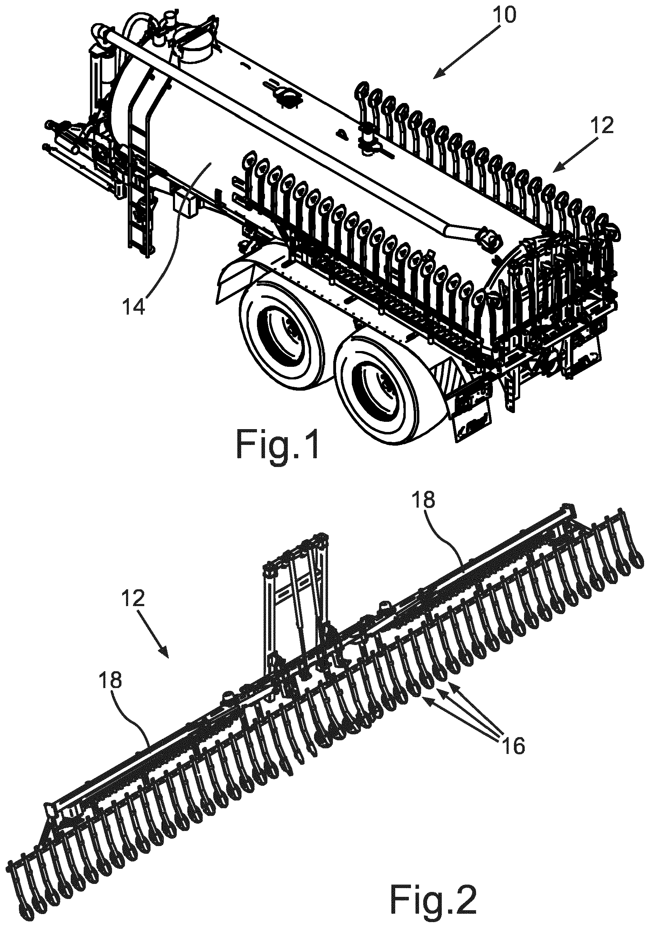

In Fig. 1 ist ein Fasswagen 10 in einer Perspektivansicht gezeigt. An dem Fasswagen 10 ist eine Gülleausbringvorrichtung 12 angebracht, welche an einer nicht näher bezeichneten Austrittsöffnung eines am Fasswagen angebrachten Güllefasses 14 angeschlossen ist. Die Gülleausbringvorrichtung ist in der vorliegenden Darstellung in ihrer nach oben geklappten und eingeklappten Stellung gezeigt.

In Fig. 2 ist die Gülleausbringvorrichtung 12 alleine in einer Perspektivansicht gezeigt. Die Gülleausbringvorrichtung 12 ist in der vorliegenden Darstellung in ihrer heruntergeklappten und vollständig ausgeklappten Stellung dargestellt, so wie sie verwendet wird, wenn mittels der Gülleausbringvorrichtung 12 Gülle ausgebracht bzw. verteilt werden soll. An der Gülleausbringvorrichtung 12 ist eine Vielzahl von Scheibenschlitzeinheiten 16 nebeneinander angeordnet. Der Übersichtlichkeit halber sind nur drei der Scheibenschlitzeinheiten 16 in der vorliegenden Darstellung mit einem Bezugszeichen versehen worden.

Die Gülleausbringvorrichtung 12 umfasst zwei Verteilerrahmen 18, durch welche die im Güllefass 14 befindliche Gülle zu den einzelnen Scheibenschlitzeinheiten 16 befördert werden kann. In die Verteilerrahmen 18 sind jeweilige hier nicht näher bezeichnete Förderschnecken integriert, mittels welchen die Gülle durch die Verteilerrahmen 18 hindurchbefördert wird. Die Verteilerrahmen 18 weisen eine Vielzahl hier nicht näher bezeichneter Gülleauslaufbohrungen auf, an welchen die jeweiligen Scheibenschlitzeinheiten 16 separat angeschlossen sind, sodass durch die Verteilerrahmen 18 hindurchbeförderte Gülle zu den Scheibenschlitzeinheiten 16 gelangen kann.

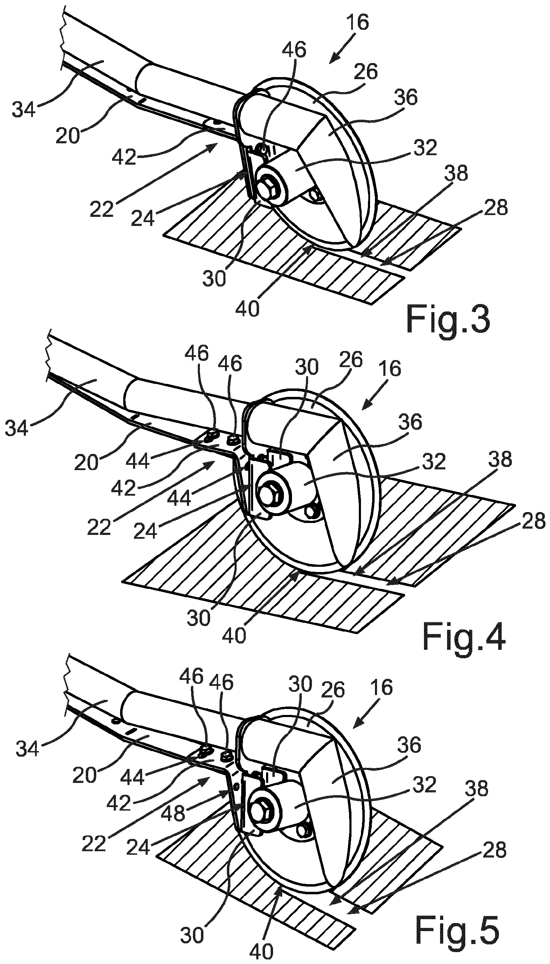

In Fig. 3 ist eine erste Ausführungsform der Scheibenschlitzeinheit 16 in einer Perspektivansicht gezeigt. Die Scheibenschlitzeinheit 16 umfasst ein Federelement 20, welches in Form einer Art Blattfeder ausgebildet ist. An einem hier nicht erkennbaren ersten Längsende wird das Federelement 20 an der Gülleausbringvorrichtung 12 befestigt, beispielsweise unter Zuhilfenahme einer dafür geeigneten Adapterplatte. Im Bereich eines zweiten Längsendes 22 des Federelements 20 ist eine Halterung 24 angebracht, an welcher eine Schlitzscheibe 26 zum Schneiden einer Furche 28 in den Boden drehbar gelagert ist. Die Halterung 24 umfasst zwei Laschen 30, mittels welchen eine Nabe 32 gehalten ist, durch welche eine hier nicht dargestellte Achse der Schlitzscheibe 26 hindurchgeführt ist.

Entlang der Längsrichtung des Federelements 20 ist ein Auslaufschlauch 34 verlegt und befestigt. Dieser Auslaufschlauch 34 kann an den zuvor erwähnten Gülleauslaufbohrungen der Verteilerrahmen 18 angeschlossen werden. Der Auslaufschlauch 34 mündet in eine Gülledüse 36, deren hier nicht näher bezeichnete Austrittsöffnung auf einen Gülleeinbringpunkt 38 gerichtet ist, welcher bezogen auf eine bestimmungsgemäße Bewegungsrichtung der Scheibenschlitzeinheit 16 hinter einem Aufstandspunkt 40 der Schlitzscheibe 26 angeordnet ist.

Wenn die Scheibenschlitzeinheit 36 über den Boden gezogen wird, rollt die Schlitzscheibe 26 auf dem Boden ab, wobei die Schlitzscheibe 26 mittels des Federelements 20 auf den Boden gedrückt wird. In Folge dessen furcht die Schlitzscheibe 26 am Aufstandspunkt 40 die Furche 28 in den Boden hinein, wobei durch den Auslaufschlauch 34 hindurch Gülle zur Gülledüse 36 strömt und am Gülleeinbringpunkt 38 auf den Boden trifft, sodass die Gülle in die zuvor hergestellte Furche 28 einsickern kann.

Im vorliegend gezeigten Fall ist die Halterung 24 an einer Winkelplatte 42 befestigt, welche am zweiten Längsende 22 des Federelements 20 befestigt ist. Die Halterung 24 weist eine nicht näher bezeichnete Durchgangsöffnung auf, an welcher der Auslaufschlauch 34 und die Düse 36 miteinander verbunden sind. Die Winkelplatte 42 weist zwei im Wesentlichen rechtwinklig zueinander angeordnete Schenkel auf, wobei einer der Schenkel am zweiten Längsende 22 des Federelements 20 und der andere Schenkel an der Halterung 24 angeschraubt ist.

In Fig. 4 ist die erste Ausführungsform der Scheibenschlitzeinheit 16 in einer weiteren Perspektivansicht gezeigt, wobei die Scheibenschlitzeinheit 16 in der vorliegenden Darstellung seitlich gekippt und seitlich zur Bewegungsrichtung der Scheibenschlitzeinheit 16, also im Wesentlichen zur Fahrtrichtung des Fasswagen 10, angestellt angeordnet ist. Die Halterung 24 und die Winkelplatte 42 sind derart ausgestaltet, dass die Halterung mitsamt der Stützscheibe 26 zum einen um die Längsachse und zum anderen um die Hochachse der Scheibenschlitzeinheit 16 verschwenkt werden kann.

Im vorliegend gezeigten Fall wird dies dadurch realisiert, dass zum einen in der Winkelplatte 42 bogenförmige Langlöcher 44 vorgesehen sind, wobei jeweilige stiftförmige Elemente 46 durch die bogenförmigen Langlöcher 44 und durch jeweilige Bohrungen 48 hindurchgesteckt sind. Zum einen kann die Winkelplatte 42 dadurch gegenüber dem Federelement 20 um die Hochachse der Scheibenschlitzeinheit 16 verschwenkt werden. In Folge dessen wird die an der Winkelplatte 42 befestigte Halterung 24 mitsamt der Schlitzscheibe 26 ebenfalls um die Hochachse der Scheibenschlitzeinheit 16 verschwenkt. Zum anderen kann die Halterung 24 relativ zum Winkelelement 42 um die Längsachse der Scheibenschlitzeinheit verschwenkt werden, in Folge dessen die Schlitzscheibe 26 ebenfalls um die Längsachse der Scheibenschlitzeinheit 16 verschwenkt werden kann. Durch das Verschwenken der Schlitzscheibe 26 um die Hochachse kann die Schlitzscheibe zur Fahrtrichtung seitlich angestellt werden, in Folge dessen die herzustellende Breite der Furche 28 variiert werden kann. Durch die Verschwenkbarkeit der Schlitzscheibe 26 um die Längsachse kann die Scheibe 26 zudem gegenüber der Vertikalen verkippt werden.

In Fig. 5 ist die erste Ausführungsform der Scheibenschlitzeinheit in einer weiteren Perspektivansicht gezeigt, wobei bei dieser Variante zur Verschwenkung der Schlitzscheibe 26 um die Längsachse der Scheibenschlitzeinheit 16 statt des bogenförmigen Langlochs 44 an dem unteren Schenkel der Winkelplatte 42 mehrere einzelne Bohrungen 48 vorgesehen sind. Durch die Halterung 24 hindurch kann ein hier nicht dargestelltes bzw. nicht erkennbares stiftförmiges Element 46 (in Fig. 3 erkennbar) hindurchgesteckt werden. Je nachdem, durch welche der Bohrungen 48 das stiftförmige Element 46 dabei sowohl durch die Halterung 24 als auch durch die Winkelplatte 42 hindurchgesteckt wird, ergibt sich eine unterschiedlich verschwenkte Positionierung der Schlitzscheibe 26.

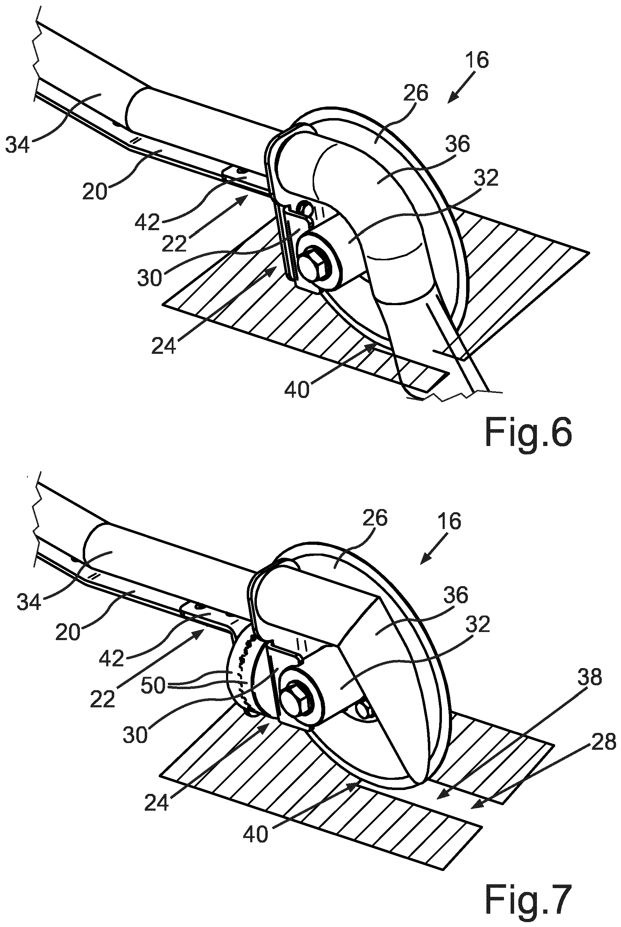

In Fig. 6 ist eine zweite Ausführungsform der Scheibenschlitzeinheit 16 in einer Perspektivansicht gezeigt. Die zweite Ausführungsform der Scheibenschlitzeinheit 16 unterscheidet sich von der ersten Ausführungsform der Scheibenschlitzeinheit 16 nur dadurch, dass die Düse 36 in Form eines Gummischuhs und nicht in Form einer starren Düse ausgebildet ist.

In Fig. 7 ist eine dritte Ausführungsform der Scheibenschlitzeinheit 16 in einer Perspektivansicht gezeigt. Um die Verschwenkbarkeit der Schlitzscheibe 26 um die Längsachse der Scheibenschlitzeinheit 16 zu ermöglichen, ist bei dieser Ausführungsform eine Zahnscheibenpaarung 50 vorgesehen. Die Zahnscheibenpaarung 50 wird aus zwei hier nicht näher bezeichneten einzelnen Zahnscheiben mit jeweiligen Stirnverzahnungen gebildet, wobei die eine der beiden Zahnscheiben an dem unteren Schenkel der Winkelplatte 42 und die andere Zahnscheibe an der Halterung 24 angebracht ist. Durch Verdrehen der Zahnscheiben der Zahnscheibenpaarung 50 zueinander kann die Schlitzscheibe 26 um die Längsachse der Scheibenschlitzeinheit 16 verschwenkt werden.

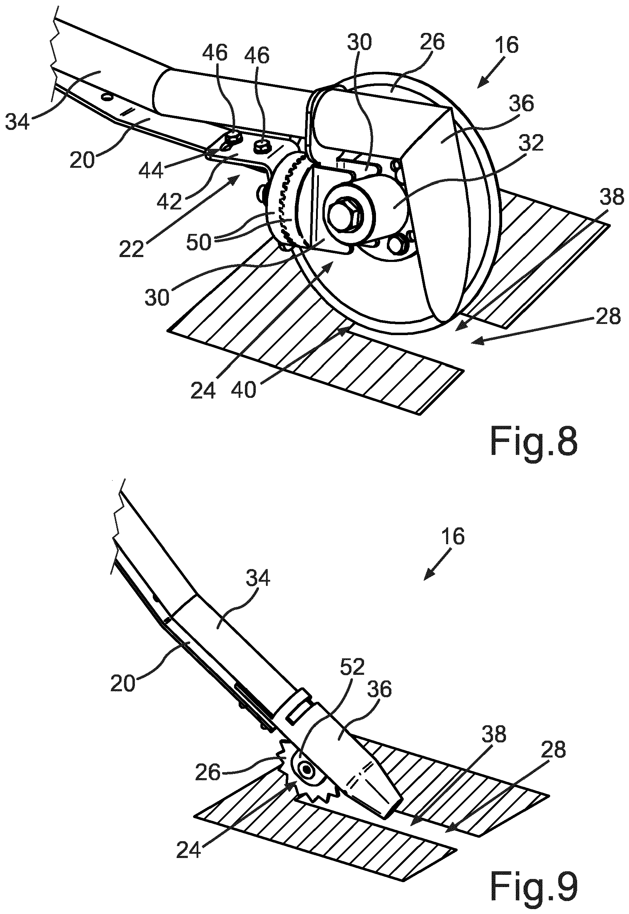

In Fig. 8 ist die dritte Ausführungsform der Scheibenschlitzeinheit 16 in einer weiteren Perspektivansicht dargestellt, wobei die Schlitzscheibe 26 verkippt und angestellt zur Fahrtrichtung angeordnet ist. Das seitliche Kippen wurde dadurch realisiert, dass die Zahnscheiben der Zahnscheibenpaarung 50 gegenüber der in Fig. 7 gezeigten Stellung relativ zueinander verdreht worden sind. Das Anstellen der Schlitzscheibe 26 wird wiederum dadurch realisiert, dass in dem oberen Schenkel der Winkelplatte 42 ein bogenförmiges Langloch 44 vorgesehen ist. Dadurch kann die Winkelplatte 42, wie bereits zuvor schon erläutert, gegenüber dem Federelement 20 verschwenkt werden, in Folge dessen die Schlitzscheibe 26 quer zur Fahrtrichtung angestellt werden kann.

In Fig. 9 ist eine vierte Ausführungsform der Scheibenschlitzeinheit 16 in einer Perspektivansicht gezeigt. In der vorliegend gezeigten Ausführungsform ist die Halterung 24 direkt an der Düse 36 angebracht, wobei die Halterung 24 zwei Schenkel 52 aufweist, welche zur Lagerung einer nicht näher bezeichneten Achse der Schlitzscheibe 26 dienen. Im Gegensatz zu den anderen Ausführungsformen, welche in den Figuren 3 bis 8 beschrieben worden sind, ist die Schlitzscheibe 26 in Querrichtung der Scheibenschlitzeinheit 16 zumindest im Wesentlichen zentriert zur Gülledüse 36 angeordnet. Bei den ersten drei Ausführungsformen der Scheibenschlitzeinheit 16 ist die Schlitzscheibe 26 in Querrichtung der Scheibenschlitzeinheit 16 seitlich versetzt neben der Gülledüse 36 angeordnet.

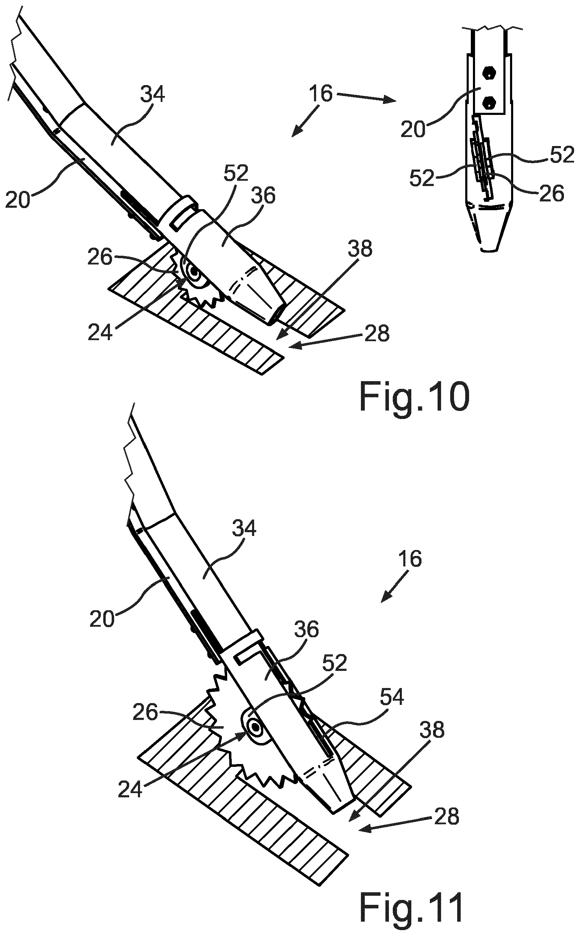

In Fig. 10 ist die vierte Ausführungsform der Scheibenschlitzeinheit 16 in einer weiteren Perspektivansicht dargestellt, wobei zudem noch die Scheibenschlitzeinheit 16 in einer Ansicht von unten dargestellt ist. Wie zu erkennen, ist die Schlitzscheibe 26 in der vorliegenden Darstellung quer zur Fahrtrichtung angestellt worden, sodass die Schlitzscheibe 26 nicht mehr mit der Längsachse der Scheibenschlitzeinheit 16 fluchtet. Die Halterung 24 ist dafür entsprechend verschwenkbar an der Düse 36 gelagert.

In Fig. 11 ist eine fünfte Ausführungsform der Scheibenschlitzeinheit 16 in einer Perspektivansicht gezeigt. Wie bei der vierten Ausführungsform ist auch bei der vorliegenden Ausführungsform die Halterung 24 unmittelbar an der Düse 36 gelagert. Auch ist die Schlitzscheibe 26 in Querrichtung der Scheibenschlitzeinheit 16 wiederum zumindest im Wesentlichen zentriert zur Gülledüse 36 angeordnet. Im vorliegend gezeigten Fall ist die Schlitzscheibe 26 bezüglich ihres Durchmessers so groß, dass diese in die Düse 36 hineinragt und teilweise wiederum aus dieser herausragt. Dafür sind an der Düse 36 an ihrer Oberseite und Unterseite jeweilige längliche Durchgangsöffnungen 54 vorgesehen, sodass die Schlitzscheibe 26 innerhalb der Düse 36 angeordnet werden kann und über diese hinausragen kann.

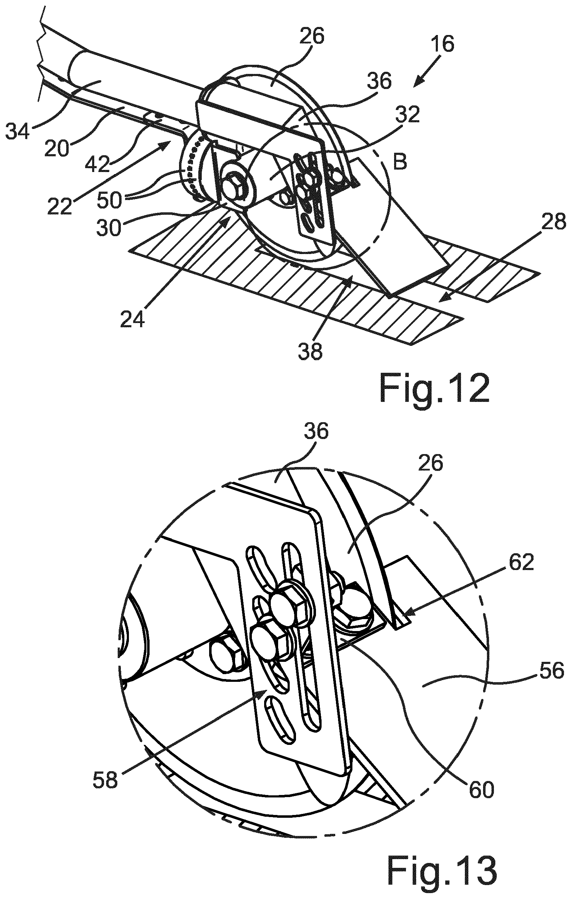

In Fig. 12 ist dir dritte Ausführungsform der Scheibenschlitzeinheit 16 in einer weiteren Perspektivansicht gezeigt, wobei zusätzlich die Scheibenschlitzeinheit 16 ein Abdeckelement 56 in Form einer flexiblen Matte aus Polyurethan umfasst. Das Abdeckelement 56 ist derart angeordnet, dass dieses den Boden bezogen auf die bestimmungsgemäße Bewegungsrichtung der Scheibenschlitzeinheit 16 hinter dem Gülleeinbringpunkt 38 berührt, sodass eine mittels der Schlitzscheibe 26 im Boden hergestellte und mit Gülle befüllte Furche 28 wieder mit Bodenmaterial abgedeckt wird. Bei der Verwendung der Scheibenschlitzeinheit 16 sorgt also das Abdeckelement 56 dafür, dass die mit Gülle befüllte Furche 28 wiederum mit Erde oder anderem Bodenmaterial zugedeckt wird. Dadurch kann die in die Furche 28 eingebrachte Gülle noch besser eingearbeitet werden, wobei insbesondere keine Gefahr der Ausschwemmung der eingebrachten Gülle besteht. Darüber hinaus ergibt sich eine besser Nährstoffausbeute, da eine Stickstoffverflüchtigung unterbunden wird. Zudem wird auch die Geruchsbildung bei der Gülleeinbringung minimiert, da die mit Gülle befüllte Furche 28 mittels des Abdeckelements 56 wieder mit Erde oder anderem Bodenmaterial zugeschüttet wird.

In Fig. 13 ist der in Fig. 12 gezeigte Bereich B in einer Detailansicht gezeigt. Eine Platte 58 mit nicht näher bezeichneten Langlöchern, welche zum Teil bogenförmig und zum Teil gerade ausgebildet sind, dient zur Befestigung des Abdeckelements 56. Eine Winkelplatte 60 ist an der Platte 58 befestigt. Durch die Vielzahl der Langlöcher in der Platte 58 kann die Anordnung und Positionierung des Abdeckelements 56 passgenau variiert werden. Wie zu erkennen, ist in dem Abdeckelement 56 noch eine längliche Durchgangsöffnung 62 vorgesehen, sodass die Schlitzscheibe 26 durch das Abdeckelement 56 hindurchtauchen kann.

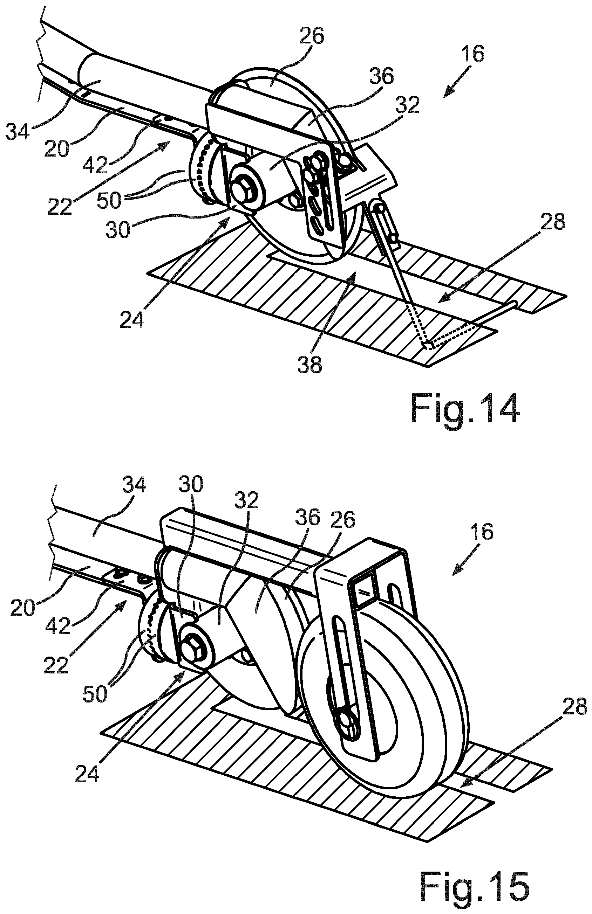

In Fig. 14 ist wiederum die dritte Ausführungsform der Scheibenschlitzeinheit 16 in einer Perspektivansicht gezeigt, wobei das Abdeckelement 56 in Form eines bügelförmigen Federelements ausgebildet ist. Das bügelförmige Federelement 56 sorgt ebenfalls dafür, eine mittels der Schlitzscheibe 26 hergestellte Furche wieder abzudecken, nachdem mittels der Düse 36 Gülle in die hergestellte Furche 28 injiziert bzw. eingebracht worden ist.

In Fig. 15 ist die dritte Ausführungsform der Scheibenschlitzeinheit 16 in einer weiteren Perspektivansicht dargestellt, wobei als das Abdeckelement 56 im vorliegenden Fall ein Rad dient. Das nachgeführte Rad 56 dient ebenfalls dazu, die hergestellte Furche 28 wieder mit Erde oder anderem Bodenmaterial abzudecken, nachdem mittels der Düse 36 Gülle in die hergestellte Furche 28 eingebracht worden ist.

Anhand der Fig. 12 bis 15 wurden verschiedene Ausführungsformen des Abdeckelements 56 zwar nur im Zusammenhang mit der dritten Ausführungsform der Scheibenschlitzeinheit 16 beschrieben, jedoch können sämtliche dieser Ausführungsformen des Abdeckelements 56 selbstverständlich auch an den anderen Ausführungsformen der Scheibenschlitzeinheit 16 vorgesehen werden.

### BEZUGSZEICHENLISTE:

- 10: Fasswagen
- 12: Gülleausbringvorrichtung
- 14: Güllefass
- 16: Scheibenschlitzeinheit
- 18: Verteilerrahmen
- 20: Federelement
- 22: zweites Längsende
- 24: Halterung
- 26: Schlitzscheibe
- 28: Furche
- 30: Lasche
- 32: Nabe
- 34: Auslaufschlauch
- 36: Gülledüse
- 38: Gülleeinbringpunkt
- 40: Aufstandspunkt
- 42: Winkelplatte
- 44: bogenförmiges Langloch
- 46: stiftförmiges Element
- 48: Bohrung
- 50: Zahnscheibenpaarung
- 52: Schenkel
- 54: Durchgangsöffnung
- 56: Abdeckelement
- 58: Platte
- 60: Winkelplatte
- 62: Durchgangsöffnung

## Patentansprüche

1. Scheibenschlitzeinheit (16) für eine Gülleausbringvorrichtung (12), umfassend
- ein Federelement (20), welches mit einem ersten Längsende an der Gülleausbringvorrichtung (12) befestigbar ist;
- eine im Bereich eines zweiten Längsendes des Federelements (20) angebrachte Halterung (24), an welcher eine Schlitzscheibe (26) zum Schneiden einer Furche (28) in den Boden drehbar gelagert ist;
- einen entlang der Längsrichtung des Federelements (20) an diesem angeordneten Auslaufschlauch (34), an welchem eine Gülledüse (36) angebracht ist, deren Austrittsöffnung auf einen Gülleeinbringpunkt (38) gerichtet ist, welcher bezogen auf eine bestimmungsgemäße Bewegungsrichtung der Scheibenschlitzeinheit (16) hinter einem Aufstandspunkt (40) der Schlitzscheibe (26) angeordnet ist; **dadurch gekennzeichnet, dass**
die Halterung (24) um eine Längsachse und/oder um eine Hochachse der Scheibenschlitzeinheit (16) verschwenkbar gelagert ist.

2. Scheibenschlitzeinheit (16) nach Anspruch 1,
**dadurch gekennzeichnet, dass**
die Halterung (24) an einer Winkelplatte (42) befestigt ist, welche am zweiten Längsende (22) des Federelements (20) befestigt ist.

3. Scheibenschlitzeinheit (16) nach Anspruch 1,
**dadurch gekennzeichnet, dass**
die Halterung (24) an der Gülledüse (36) befestigt ist.

4. Scheibenschlitzeinheit (16) nach einem der vorhergehenden Ansprüche,
**dadurch gekennzeichnet, dass**
die verschwenkbare Lagerung mittels wenigstens eines bogenförmigen Langlochs (44) und/oder mehreren unterschiedlich positionierten Bohrungen (48) realisiert ist.

5. Scheibenschlitzeinheit (16) nach einem der vorhergehenden Ansprüche,
**dadurch gekennzeichnet, dass**
die verschwenkbare Lagerung mittels einer Zahnscheibenpaarung (50) realisiert ist.

6. Scheibenschlitzeinheit (16) nach einem der vorhergehenden Ansprüche,
**dadurch gekennzeichnet, dass**
die Gülledüse (36) in Form eines Gummischuhs oder in Form einer starren Düse ausgebildet ist.

7. Scheibenschlitzeinheit (16) nach einem der vorhergehenden Ansprüche,
**dadurch gekennzeichnet, dass**
die Schlitzscheibe (26) in Querrichtung der Scheibenschlitzeinheit (16) seitlich versetzt neben der Gülledüse (36) angeordnet ist.

8. Scheibenschlitzeinheit (16) nach einem der Ansprüche 1 bis 6,
**dadurch gekennzeichnet, dass**
die Schlitzscheibe (26) in Querrichtung der Scheibenschlitzeinheit (16) zentriert zur Gülledüse (36) angeordnet ist.

9. Scheibenschlitzeinheit (16) nach Anspruch 8,
**dadurch gekennzeichnet, dass**
die Schlitzscheibe (26) in die Gülledüse (36) hineinragt.

10. Scheibenschlitzeinheit (16) nach einem der vorhergehenden Ansprüche,
**dadurch gekennzeichnet, dass**
die Scheibenschlitzeinheit (16) ein Abdeckelement (56) umfasst, welches derart angeordnet ist, dass dieses den Boden bezogen auf die bestimmungsgemäße Bewegungsrichtung der Scheibenschlitzeinheit (16) hinter dem Gülleeinbringpunkt (38) berührt, sodass eine mittels der Schlitzscheibe (26) im Boden hergestellte und mit Gülle befüllte Furche (28) wieder mit Bodenmaterial abgedeckt wird.

11. Scheibenschlitzeinheit (16) nach Anspruch 10,
**dadurch gekennzeichnet, dass**
das Abdeckelement (56) in Form von einer flexiblen Matte, einem bügelförmigen Federelement oder einem Rad ausgebildet ist.

12. Gülleausbringvorrichtung (12) mit zumindest einer Scheibenschlitzeinheit (16) nach einem der vorhergehenden Ansprüche.

13. Fasswagen (10) mit einem Güllefass (14) und einer Gülleausbringvorrichtung (12) nach Anspruch 12, welche an einer Austrittsöffnung des Güllefasses (14) angeschlossen ist.

## Claims

1. Disc slot unit (16) for a liquid manure distributing device (12), comprising
- a spring element (20), which can be fastened at a first longitudinal end to the liquid manure distributing device (12);
- a holder (24) mounted in the region of a second longitudinal end of the spring element (20), on which a slot disc (26) is rotatably mounted for cutting a furrow (28) in the ground;
- a discharge hose (34) arranged along the longitudinal direction of the spring element (20) on said spring element, on which discharge hose a liquid manure nozzle (36) is mounted, the outlet opening of which is directed to a liquid manure introduction point (38), which, in relation to a direction of movement during the intended use of the disc slot unit (16) is arranged behind a contact point (40) of the slot disc (26),
**characterised in that**
the holder (24) is mounted able to be pivoted about a longitudinal axis and/or about a vertical axis of the disc slot unit (16).

2. Disc slot unit (16) according to claim 1,
**characterised in that**
the holder (24) is fastened onto an angle plate (42) which is fastened onto the second longitudinal end (22) of the spring element (20).

3. Disc slot unit (16) according to claim 1,
**characterised in that**
the holder (24) is fastened onto the liquid manure nozzle (36).

4. Disc slot unit (16) according to any one of the preceding claims,
**characterised in that**
the pivotable support is realised by means of at least one arcuate elongated hole (44) and/or several differently positioned bore holes (48).

5. Disc slot unit (16) according to any one of the preceding claims,
**characterised in that**
the pivotable support is realised by means of a pair of tooth lock washers (50).

6. Disc slot unit (16) according to any of the preceding claims,
**characterised in that**
the liquid manure nozzle (36) is designed in the form of a rubber boot or in the form of a rigid nozzle.

7. Disc slot unit (16) according to any one of the preceding claims,
**characterised in that**
the slot disc (26) in transverse direction of the disc slot unit (16) is arranged laterally offset next to the liquid manure nozzle (36).

8. Disc slot unit (16) according to any of claims 1 to 6,
**characterised in that**
the slot disc (26) in transverse direction of the disc slot unit (16) is arranged to be centred relative to the liquid manure nozzle (36).

9. Disc slot unit (16) according to claim 8,
**characterised in that**
the slot disc (26) protrudes into the liquid manure nozzle (36).

10. Disc slot unit (16) according to any one of the preceding claims,
**characterised in that**
the disc slot unit (16) comprises a cover element (56) which is arranged such that it touches the ground, in respect of the direction of movement during the intended use of the disc slot unit (16), behind the liquid manure introduction point (38), such that a furrow (28) made by the slot disc (26) in the ground and filled with liquid manure is covered again with ground material.

11. Disc slot unit (16) according to claim 10,
**characterised in that**
the cover element (56) is designed in the form of a flexible mat, a bow-shaped spring element or a wheel.

12. Liquid manure distributor (12) having at least one disc slot unit (16) according to any one of the preceding claims.

13. Tank trailer (10) having a manure tank (14) and a liquid manure distributing device (12) according to claim 12, which is attached to an outlet opening of the liquid manure tank (14).

## Revendications

1. Unité formant des fentes avec des disques (16) pour un distributeur de lisier (12), comprenant
- un élément à ressort (20) qui peut être fixé par une première extrémité longitudinale au distributeur de lisier (12) ;
- un support (24) placé dans la zone d'une deuxième extrémité longitudinale de l'élément à ressort (20), sur lequel un disque à fente (26) est monté de façon à pouvoir tourner pour tracer un sillon (28) dans le sol ;
- un tuyau d'écoulement (34) disposé le long de la direction longitudinale de l'élément à ressort (20) sur celui-ci, sur lequel une buse de lisier (36) est placée, dont l'ouverture d'évacuation est orientée sur un point d'apport de lisier (38) qui est disposé par rapport à une direction de mouvement prévue de l'unité formant des fentes avec des disques (16) à l'arrière d'un point de contact (40) du disque à fente (26) ;
**caractérisée en ce que**
le support (24) est monté autour d'un axe longitudinal et/ou autour d'un axe vertical de l'unité formant des fentes avec des disques (16) de façon à pouvoir basculer.

2. Unité formant des fentes avec des disques (16) selon la revendication 1,
**caractérisée en ce que**
le support (24) est fixé à une plaque angulaire (42) qui est fixée à la seconde extrémité longitudinale (22) de l'élément à ressort (20).

3. Unité formant des fentes avec des disques (16) selon la revendication 1,
**caractérisée en ce que**
le support (24) est fixé à la buse de lisier (36).

4. Unité formant des fentes avec des disques (16) selon l'une quelconque des revendications précédentes,
**caractérisée en ce que**
le montage pouvant pivoter est réalisé au moyen d'au moins un trou longitudinal en forme d'arc (44) et/ou de plusieurs alésages (48) positionnés de différentes façons.

5. Unité formant des fentes avec des disques (16) selon l'une quelconque des revendications précédentes,
**caractérisée en ce que**
le montage pouvant pivoter est réalisé au moyen d'un accouplement à disque denté (50).

6. Unité formant des fentes avec des disques (16) selon l'une quelconque des revendications précédentes,
**caractérisée en ce que**
la buse de lisier (36) est conçue sous la forme d'une semelle en caoutchouc ou sous la forme d'une buse rigide.

7. Unité formant des fentes avec des disques (16) selon l'une quelconque des revendications précédentes,
**caractérisée en ce que**
le disque à fente (26) est disposé de façon décalée latéralement en direction perpendiculaire à l'unité formant des fentes avec des disques (16) à côté de la buse de lisier (36).

8. Unité formant des fentes avec des disques (16) selon l'une quelconque des revendications 1 à 6,
**caractérisée en ce que**
le disque à fente (26) est disposé de façon centrée en direction perpendiculaire à l'unité formant des fentes avec des disques (16) par rapport à la buse de lisier (36).

9. Unité formant des fentes avec des disques (16) selon la revendication 8,
**caractérisée en ce que**
le disque à fente (26) dépasse à l'intérieur de la buse de lisier (36).

10. Unité formant des fentes avec des disques (16) selon l'une quelconque des revendications précédentes,
**caractérisée en ce que**
l'unité formant des fentes avec des disques (16) comprend un élément de recouvrement (56) qui est disposé de telle sorte que celui-ci touche le sol par rapport à la direction de mouvement prévue de l'unité formant des fentes avec des disques (16) à l'arrière du point d'apport de lisier (38), de sorte qu'un sillon (28) produit dans le sol au moyen du disque à fente (26) et rempli de lisier soit à nouveau recouvert de matériau du sol.

11. Unité formant des fentes avec des disques (16) selon la revendication 10,
**caractérisée en ce que**
l'élément de recouvrement (56) est conçu sous la forme d'un tapis flexible, d'un élément à ressort en forme d'étrier ou d'une roue.

12. Distributeur de lisier (12) comportant au moins une unité formant des fentes avec des disques (16) selon l'une quelconque des revendications précédentes.

13. Camion-citerne (10) comportant une citerne de lisier (14) et un distributeur de lisier (12) selon la revendication 12, qui est raccordé à une ouverture d'entrée de la citerne de lisier (14).
